# EUROPÄISCHE PATENTSCHRIFT

(11) **EP 1 673 207 B1**
(45) Veröffentlichungstag und Bekanntmachung des Hinweises auf die Patenterteilung: **25.04.2007**
(21) Anmeldenummer: 04764761.5
(22) Anmeldetag: 02.09.2004
(51) Int. Cl.: B29C 44/12, B29C 44/32

(54) **VERFAHREN ZUM VERSCHLIESSEN DER ABSCHLUSS- ODER SCHNITTKANTE VON WABENPLATTEN**
METHOD FOR SEALING THE BORDER OR EDGE OF CUT OF HONEYCOMB BOARDS
PROCEDE POUR OBTURER LE BORD OU L'ARETE DE COUPE DE PANNEAUX A STRUCTURE ALVEOLAIRE

(30) Priorität: 17.10.2003 DE 10349012
(43) Veröffentlichungstag der Anmeldung: 28.06.2006
(73) Patentinhaber: Mkt Moderne Kunststoff-Technik Gebrüder Eschbach Gmbh, 99885 Ohrdruf/Thüringen (DE)
(72) Erfinder: ESCHBACH, Mathias, 99885 Ohrdruf/Thüringen (DE)
(74) Vertreter: Kruspig, Volkmar
(86) Internationale Anmeldenummer: PCT/EP2004/009803
(87) Internationale Veröffentlichungsnummer: WO 2005/046954

(56) Entgegenhaltungen:
- DE-A- 2 932 409
- US-A- 3 546 841
- US-A- 4 294 055
- US-A- 4 602 466
- US-A- 5 149 574

## Beschreibung

Die Erfindung betrifft ein Verfahren zum Verschließen der Abschluss- oder Schnittkante von Wabenplatten mittels aufschäumbarem Kunststoffmaterial, welches zur Ausfüllung von Hohlräumen entlang der Kante eingebracht oder aufgetragen wird, gemäß Oberbegriff des Patentanspruchs 1, und dem Dokument DE-A-29 32 409.

Wabenplatten besitzen im Vergleich zur sogenannten Spanplatte bessere statische Eigenschaften bei einem deutlich geringeren Gewicht. Die Wabenplatte basiert auf einer Wabenstruktur aus kunstharzgetränktem Papier oder dergleichen und einer Beschichtung mit verschiedenen Materialien in Form einer Deck- und Grundplatte. Problematisch bei der Herstellung von Wabenplatten ist jedoch die Tatsache, dass jede Platte mit einem Holzabschluss zu versehen st, da ansonsten Bohrungen jeder Art zur Befestigung von Beschlägen oder dergleichen nicht möglich sind.

Eine Alternative zum Verschließen der Kanten von Wabenplatten besteht darin, dass ein Verfüllen mit Schaumstoff vorgenommen wird. Hierbei ist jedoch nach dem Aushärten des Schaumstoffs ein aufwendiger Abtrennvorgang erforderlich sowie eine notwendige Nachbearbeitung insbesondere dann, wenn als äußerer Abschluss ein Kantenband mit entsprechendem Dekor aufzubringen ist.

Aus dem Vorgenannten ist es daher Aufgabe der Erfindung, ein weiterentwickeltes Verfahren zum Abschließen der Abschluss- oder Schnittkante von Wabenplatten mittels aufschäumbarem Kunststoffmaterial anzugeben, wobei das Kunststoffmaterial zur Ausfüllung von Hohlräumen entlang der Kante eingebracht oder aufgetragen wird, ohne dass im Nachgang ein Abstechen überquellenden Schaums oder ein Abfräsen bzw. sonstiges Abtrennen des Schaumwerkstoffs notwendig ist, wobei die Möglichkeit bestehen soll, unmittelbar im Arbeitsgang des Ausschäumens dann, wenn gewünscht, ein Kantenband als Schnittkantenabdeckung aufzubringen.

Die Lösung der Aufgabe der Erfindung erfolgt mit einem Verfahren gemäß Definition nach der Lehre des Patentanspruchs 1, wobei die Unteransprüche mindestens zweckmäßige Ausgestaltungen und Weiterbildungen darstellen.

Demnach wird die zu verschließende Schnittkante der Platte kontinuierlich oder diskontinuierlich über ein Kalibrierband oder eine Kalibrierschiene geführt, wobei die Kunststoff-Schaummasse unmittelbar vor dem Einlauf der Platte in das Band oder die Schiene in den durch das Band oder die Schiene nach außen begrenzten Hohlraum eingebracht wird, wobei das Band oder die Schiene bis zum Aushärten in Presskontakt mit der Schnittkante verbleibt.

Als Begrenzung des Hohlraums nach außen kann ausgestaltend ein Kantenband zugeführt werden, welches durch die Kunststoff-Schaummasse mit der Platte eine stoffschlüssige innige Verbindung eingeht. Zusätzlich kann, wenn notwendig, die zur Wabenplatte hin gerichtete Seite des Kantenbands mit einem Schmelzklebe-Werkstoff beschichtet werden.

Zur weiteren Verbesserung der Effektivität des Verfahrens bei der Herstellung von Wabenplatten können zwei gegenüberliegende Kalibrierbänder oder -schienen die jeweilige Wabenplatte oder sogar ein Plattenpaket aufnehmen, um in einem Arbeitsschritt zwei gegenüberliegende Schnittkanten zu verschließen.

Das Kantenband kann verfahrensseitig dichtend gegen die jeweilige Wäbenplattenkante zum Erzeugen einer ausreichenden Schaumdichte gepresst werden, wobei bei diesem technologischen Schritt auch die Möglichkeit besteht dafür Sorge zu tragen, dass eine gewisse Kunststoff-Schaummasse quasi aus dem Füllvolumen herausgequetscht wird und als Kleber für die Befestigung des Kantenbands an der Deck- und/oder Grundplatte der Wabenplatte wirkt.

Um einen definierten Freiraum innerhalb der Wabenplatte zu schaffen, welcher dann mit der Kunststoff-Schaummasse auszufüllen ist, wird das Wabenmaterial der Wabenplatte im Abschluss- oder Schnittkantenbereich mit Hilfe einer Pressrolle, eines unter Druckkraft stehenden Gleitschuhs oder dergleichen Einrichtung verdichtet.
Das so erhaltene Volumen wird dann ausgeschäumt und erreicht auch ohne Einsatz einer Holzleiste eine sehr hohe Stabilität, wobei im entsprechenden Randbereich eine Bohrfähigkeit der Platte gegeben ist.

Bei der vorstehenden Ausführungsform liegt es im Sinne der Erfindung, im mit Kunststoff-Schaummaterial ausgefüllten Freiraum Mittel zum Befestigen oder Halten von Beschlägen, Scharnieren, Bändern oder dergleichen Einrichtungen anzuordnen, wobei diese Einrichtungen durch das Kunststoff-Schaummaterial nach dessen Aushärten fixiert werden und quasi im Kunststoff-Schaummaterial festhaltend eingebettet sind.

Im Deck- und/oder Grundplattenbereich, d.h. an den Außenkanten dieses Bereichs der Wabenplatte, kann eine Fase vorgesehen sein, so dass auch im äußersten Randbereich eine größere Menge Kunststoff-Schaummaterial einbringbar ist mit der Folge, dass auch stirnseitig eine Befestigung von Bändern oder dergleichen mechanischen Mitteln erfolgen kann.

Die Erfindung soll nachstehend anhand eines Ausführungsbeispiels sowie unter Zuhilfenahme von Figuren näher erläutert werden.

Hierbei zeigen:
- Fig. 1 bis 4: eine beispielhafte Bearbeitungsabfolge zum seitlichen Verschluss einer Wabenplatte;
- Fig. 5 und 5a: unterschiedliche Füllvolumina, wie sie sich bei gleichem Wabenaufbau aber unterschiedlichem Zuschnitt ergeben können, mit Erkennbarkeit des zeitlichen Verlaufs des Schaumvorgangs;
- Fig. 6: eine Detaildarstellung des Ausfüllens der Hohlräume der Wabenplatten mit Kunststoffschaum und

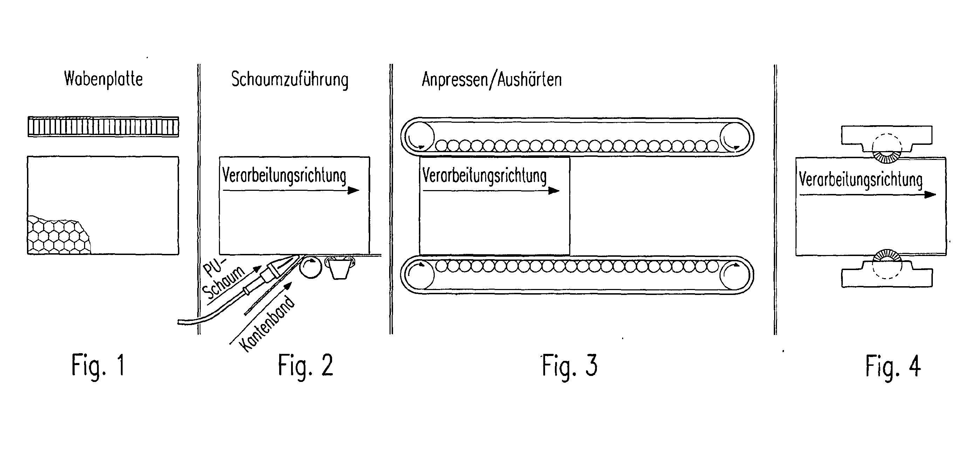

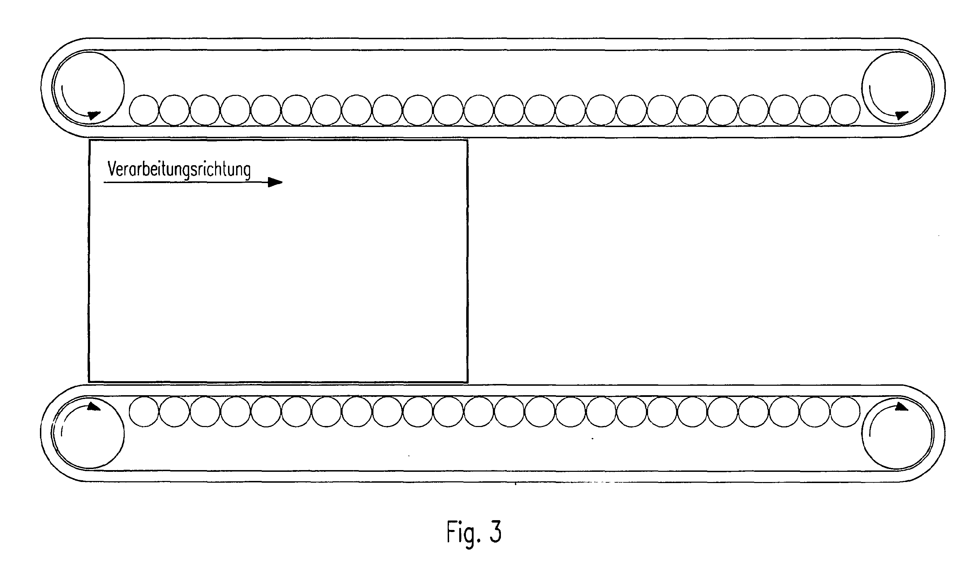

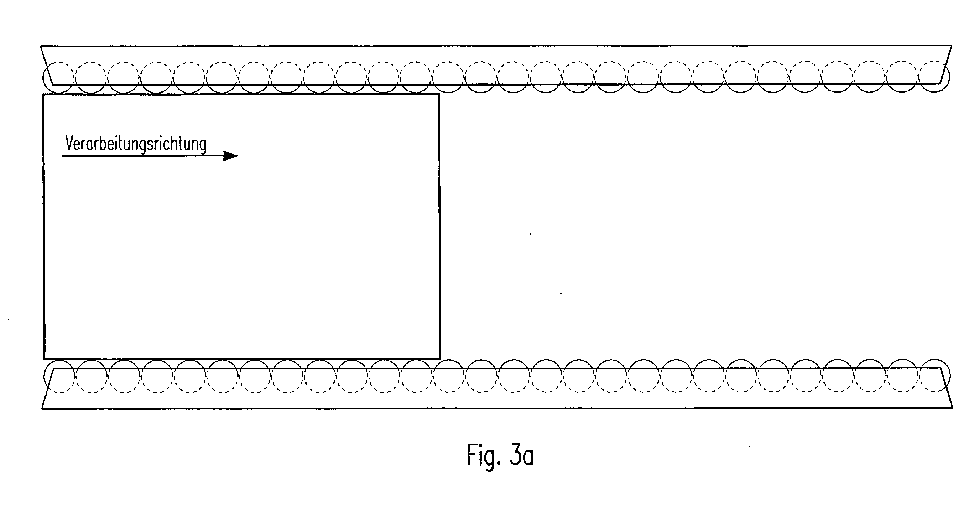

- Fig. 3a: eine Detaildarstellung des Anpressens des Kantenbands dichtend gegen eine entsprechende Kante der Wabenplatte während des Aufschäumvorgangs.

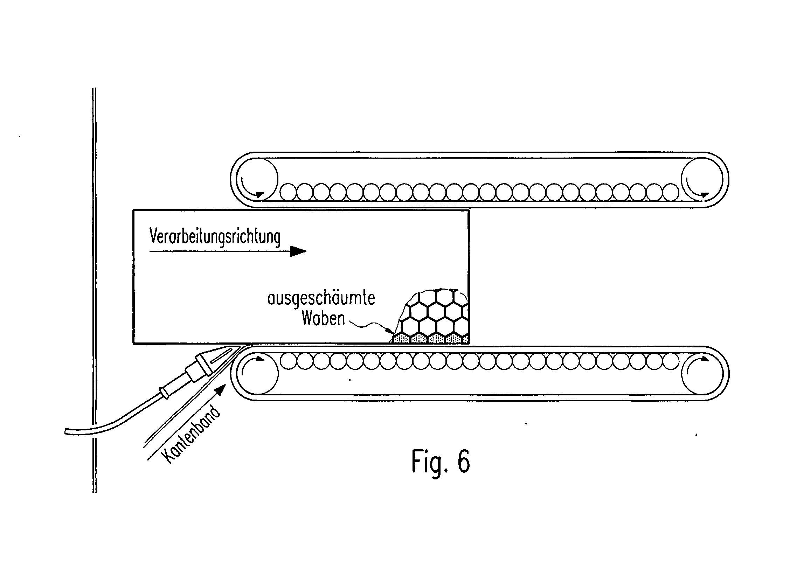

Gemäß den Darstellungen nach Fig. 1 und 6 werden die Hohlräume der Wabenplatten im Stirnseitenbereich bzw. entlang der Längskanten mit Kunststoffschaum ausgefüllt, wobei die Schaummasse kurz vor dem Einlauf der Wabenplatte in ein den Schaum begrenzendes Kalibrierband aufgetragen wird. Im Bereich des Abzugbands (Fig. 3 und 3a) beginnt der eigentliche Aufschäumvorgang, wobei beim Auslauf aus dem Abzugsband der Schaum ausgehärtet ist und keine Volumenveränderung mehr zeigt. Bei der Darstellung nach Fig. 6 wird von einem einseitigen Einbringen des Schaumkunststoffs ausgegangen; jedoch kann dieses Einbringen auch beidseitig über eine entsprechende Schaumstoff-Zuführeinrichtung vorgenommen werden.

Die mit einer Vorrichtung und einem Verfahren gemäß Fig. 1 und 6 hergestellten Platten können dann mit üblichen Kantenanleimmaschinen weiter verarbeitet werden, d.h. es kann dann auf die vorbereitete, im Kantenbereich mit ausgehärtetem Kunststoff-Schaummaterial versehene Platte ein Kantenba nd aufgebracht werden.

Bei der herstellungsseitigen Abfolge nach den Fig. 1 bis 4 werden ebenfalls die Hohlräume der Wabenplatten im Randbereich mit einer Kunststoff-Schaummasse ausgefüllt, wobei jedoch bei dieser Ausführungsform als Begrenzung nicht ein Kalibrierband, sondern das eigentliche Kantenband wirkt.

Das Kantenband wiederum wird abgestützt durch das Kalibrierband. Im Unterschied zum voranstehend geschilderten Ausführungsbeispiel werden demnach hier in einem Verarbeitungsschritt die Hohlräume der Wabenplatten ausgeschäumt und gleichzeitig das Kantenband fixiert, insbesondere aufgeklebt.

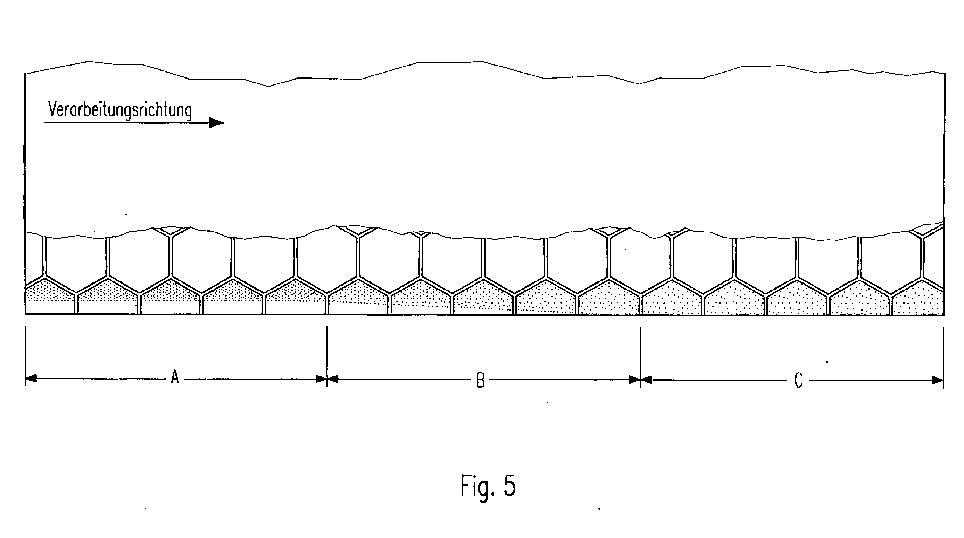

Der längskantige Überstand des Kantenbands wird durch Fräsen, Ziehklingenbearbeitung, Schwabbeln, Kappen oder dergleichen nachbearbeitet, wie dies die Fig. 4 andeutet.

Fig. 1 zeigt die auf Endmaß zugeschnittene Wabenplatte mit den auszufüllenden Hohlräumen im Randbereich.

Gemäß der Fig. 2 wird über eine z.B. Flachdüse PU-Schaum in den Bereich der Schnittkante der Wabenplatte eingebracht, wobei als Begrenzung ein Kantenband dient, das über eine Rollenanordnung mit der jeweiligen Längskante der Wabenplatte in Kontakt kommt. Der Kunststoff schäumt nach kurzer Zeit auf und füllt die Hohlräume der Wabenplatte aus und geht hierbei mit dem Kantenband eine Klebeverbindung ein, bzw. bei der erläuterten Alternative der Erfindung erfolgt eine seitliche Begrenzung durch das zugehörige Kalibrierband.

Gemäß Fig. 3 / 3a wird das Kantenband dichtend gegen die Seitenkanten der Wabenplatte während des Aufschäumvorgangs gepresst, um die gewünschte Schaumdichte zu erzeugen und ein Austreten des Schaums aus der Fuge zu verhindern.

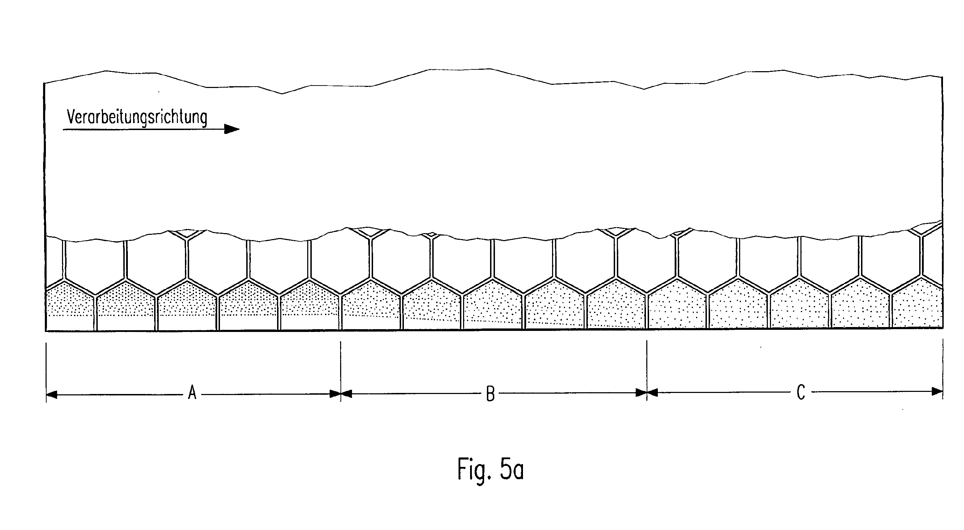

Bedingt durch den maßlich unterschiedlichen Zuschnitt der Wabenplatten bei gleicher Wabenstruktur entstehen unterschiedlich große auszuschäumende Hohlräume (siehe Fig. 5 / 5a).

Im Regelfall ist die Dosierung der Menge Kunststoff je Längeneinheit konstant. Dies hat gegebenenfalls unterschiedlich große Schaumdrücke im Innenraum zur Folge, die über den Anpressdruck des Kalibrierbands bzw. der vorgesehenen Anpresswalzen zu kompensieren sind, um zu vermeiden, dass Schaum durch die Fugen austritt.

Die schäumbaren Kunststoffe, die aus einem flüssigen oder pastösen Zustand aufschäumen und aushärten, sind in der Start- und Aushärtezeit einstellbar, wenn entsprechende Mehrkomponentensysteme zur Anwendung kommen, wie Polyurethane, Polyäther oder Polyester. Extrusionsschäume werden ebenfalls anwendungsoptimiert im Expansionsverhalten eingestellt.

Eine entsprechende variable Startzeit bezogen auf das Aufschäumen ist vorgesehen, um die zeitliche Abfolge zwischen Anpressen und Aushärten in der technologischen Folge realisieren zu können.

Die variable Aushärtezeit wird durch die Durchlaufgeschwindigkeit und die Länge der Strecke "Anpressen / Aushärten" bestimmt.

Am Ende dieser technologischen Strecke ist der Schaum so weit ausgehärtet, dass keine nennenswerte Expansion des Schaums mehr stattfindet. Auf diese Weise wird verhindert, dass sich das Kantenband abhebt. Die Klebefestigkeit ist hierbei so hoch, dass ein Nachbearbeiten wie Fräsen, Ziehklingenbearbeitung, Schwabbeln, Kappen oder Ähnliches unmittelbar nach dem Anpressen / Aushärten vorgenommen werden kann, ohne dass ein Ablösen des Kantenbands erfolgt.

Mit Hilfe der Fig. 4 ist symbolisch die Nachbearbeitung dargestellt. Das Kantenband ist üblicherweise 2 mm bis 4 mm breiter als die Dicke der Platte, auf die es aufgeklebt bzw. fixiert wird. Im üblichen Verfahren, in dem Kantenbänder mittels Schmelzkleber aufgeklebt werden unter Nutzung der sogenannten Kantenanleimmaschine, wird zunächst der Schmelzkleber auf die Spanplatte oder das Kantenband aufgetragen und sofort, so lange der Schmelzkleber noch klebeaktiv ist, durch Anpresswalzen mit der Spanplatte zusammengefügt. Anschließend erfolgt die Nachbehandlung durch Fräsen, Kappen oder dergleichen.

Die Verklebung des Kantenbands mit Wabenplatten und die Nachbearbeitung erfolgt auf analoge Weise, wobei lediglich der Schmelzkleber durch einen schaumfähigen Kunststoff ersetzt wird und als Folge davon die Anpresswalzen, die an der Kantenanleimmaschine mit größerem Abstand voneinander montiert sind, durch enganliegende Anpresswalzen oder ein Kalibrierband zu ersetzen sind, um das Kantenband während des Aufschäum- und Aushärtungsprozesses fest und permanent dichtend an die Wabenplatte zu pressen. Hieraus ist ersichtlich, dass ein vorhandener Maschinenpark durch wenig aufwendige Umrüstung auch für das erfindungsgemäße Verfahren genutzt werden kann.

Bezüglich der unterschiedlichen Füllvolumina gemäß den Fig. 5 und 5a ist anzumerken, dass diese der Schaum dadurch ausgleicht, dass er sich beim Aufschäumen unterschiedlich hoch verdichtet. Unter diesem Aspekt muss die Dosierung der Schaummenge auf eine minimale bzw. maximale Schaumdichte eingestellt werden, innerhalb der eine ausreichend hohe Reißfestigkeit des Schaums gewährleistet wird, damit die Güte der Verklebung zwischen Schaum und Kantenband entsprechend den Qualitätsanforderungen sichergestellt ist.

Um in Weiterbildung der Erfindung definierte, gleiche Füllvolumina für die Kunststoff-Schaummassen bereitzustellen, besteht die Möglichkeit, vor dem Ausschäumen im Wabenmaterial der Wabenplatte im Abschluss- oder Schnittkantenbereich mit Hilfe einer Pressrolle, eines unter Druckkraft stehenden Gleitschuhs oder einer ähnlichen Einrichtung das dortige Material zu verdichten.

In dem mit Kunststoff-Schaummaterial ausgefüllten Freiraum können ebenfalls weiterbildend Mittel zum Befestigen oder Halten von Beschlägen, Scharnieren, Bändern oder dergleichen Einrichtungen angeordnet und durch das Kunststoff-Schaummaterial nach dessen Aushärten fixiert werden. Auf diese Weise ist dann eine universelle Verwendung der derartig an den Abschluss- oder Schnittkanten verschlossenen Wabenplatten möglich.

## Patentansprüche

1. Verfahren zum Verschließen der Abschluss- oder Schnittkante von Wabenplatten mittels aufschäumbarem Kunststoffmaterial, welches zur Ausfüllung von Hohlräumen entlang der Kante eingebracht oder aufgetragen wird,
**dadurch gekennzeichnet, dass**
die zu verschließende Schnittkante der Platte kontinuierlich oder diskontinuierlich über ein Kalibrierband oder eine Kalibrierschiene geführt wird, wobei die Kunststoffschaummasse unmittelbar vor dem Einlauf der Platte in das Band oder die Schiene in den durch das Band oder die Schiene nach außen begrenzten Hohlraum eingebracht wird, wobei das Band oder die Schiene bis zum Aushärten in Presskontakt mit der Schnittkante verbleibt.

2. Verfahren nach Anspruch 1,
**dadurch gekennzeichnet, dass**
als Begrenzung des Hohlraumes nach außen ein Kantenband zugeführt wird, welches durch die Kunststoffschaummasse mit der Platte eine stoffschlüssige innige Verbindung eingeht.

3. Verfahren nach Anspruch 1 oder 2,
**dadurch gekennzeichnet, dass**
zwei gegenüberliegende Kalibrierbänder oder -schienen die jeweilige Wabenplatte oder ein Plattenpaket aufnehmen, um in einem Arbeitsschritt zwei gegenüberliegende Schnittkanten zu verschließen.

4. Verfahren nach Anspruch 2,
**dadurch gekennzeichnet, dass**
das Kantenband dichtend gegen die jeweilige Wabenplattenkante zum Erzeugen einer ausreichenden Schaumdichte gepresst wird.

5. Verfahren nach einem der vorangegangenen Ansprüche,
**dadurch gekennzeichnet, dass**
die Länge des Kalibrierbandes oder der Kalibrierschiene und/oder die Verweil- bzw. Durchlaufzeit der Platte an die Aufschäum- und Aushärtezeit des Kunststoffmaterials angepasst ist.

6. Verfahren nach Anspruch 1,
**dadurch gekennzeichnet, dass**
auf die ausgehärtete mit dem Kunststoffmaterial verschlossene Schnittkante ein Kantenband, vorzugsweise mittels Schmelzkleber aufgebracht wird.

7. Verfahren nach einem der Ansprüche 1 bis 5,
**dadurch gekennzeichnet, dass**
zur Schaffung eines definierten Freiraums, welcher mit der Kunststoff-Schaummasse auszufüllen ist, das Wabenmaterial der Wabenplatte im Abschluss- oder Schnittkantenbereich mit Hilfe einer Pressrolle, eines unter Druckkraft stehenden Gleitschuhs oder dergleichen Einrichtung verdichtet wird.

8. Verfahren nach Anspruch 7,
**dadurch gekennzeichnet, dass**
im mit Kunststoff-Schaummaterial ausgefüllten Freiraum Mittel zum Befestigen oder Halten von Beschlägen, Scharnieren, Bändern oder dergleichen Einrichtungen angeordnet und durch das Kunststoff-Schaummaterial nach dessen Aushärten fixiert werden.

9. Verfahren nach einem der vorangegangenen Ansprüche,
**dadurch gekennzeichnet, dass**
Deck- und/oder Grundplatte der Wabenplatte im Randbereich eine Fase aufweisen.

## Claims

1. A method for sealing the edging or cut edge of honeycomb boards by means of expandable synthetic material which is introduced or applied along the edging for the purpose of filling cavities, **characterized in that**
the cut edge of the board to be sealed is continuously or discontinuously guided along a calibration band or a calibration rail, whereby the synthetic foam material is introduced into the cavity delimited to the exterior by the band or the rail directly prior to the board being fed to the band or the rail, wherein the band or the rail remains in pressure contact with the cut edge until curing.

2. The method according to claim 1, **characterized in that**
an edging strip which forms an intimate material bond with the board by virtue of the synthetic foam material is added to limit the cavity to the exterior.

3. The method according to claim 1 or 2, **characterized in that**
the respective honeycomb board or board assemblage is received by two calibration bands or rails arranged opposite one another in order to seal two opposite cut edges in one step.

4. The method according to claim 2, **characterized in that**
the edging strip is pressed against the respective honeycomb board edge to produce a sufficient foam density so as to form a seal.

5. The method according to any one of the preceding claims,
**characterized in that**
the length of the calibration band or rail and/or the dwell or processing time for the board is adapted to the expansion and curing time of the synthetic material.

6. The method according to claim 1, **characterized in that**
an edging strip is applied to the cured cut edge sealed with the synthetic material, preferably by means of hot-melt adhesive.

7. The method according to any one of claims 1 to 5,
**characterized in that**
in order to create a defined free space to be filled with the synthetic foam material, the honeycomb material of the honeycomb board is compressed in the edging or cut edge area by means of a press roller, a guide shoe subject to a pressure force or other such similar means.

8. The method according to claim 7, **characterized in that** means are arranged in the free space filled with synthetic foam material to secure or hold fittings, hinges, straps or other such similar devices and fixed by the synthetic foam material after same cures.

9. The method according to any one of the preceding claims,
**characterized in that**
the edge area of the upper board and/or base board of the honeycomb board exhibits a chamfer.

## Revendications

1. Procédé pour obturer le bord terminal ou le bord de coupe de plaques en nids d'abeilles au moyen d'une matière plastique capable de mousser, qui est introduite ou appliquée le long du bord pour remplir des cavités,
**caractérisé en ce que**
le bord de coupe à obturer de la plaque est guidé en continu ou en discontinu au-dessus d'une bande ou d'un rail de calibrage, la masse de mousse de matière plastique est introduite, immédiatement avant l'entrée de la plaque, dans la bande ou dans le rail dans la cavité délimitée vers l'extérieur par la bande ou par le rail, la bande ou le rail restant en contact de pressage avec le bord de coupe jusqu'au durcissement.

2. Procédé selon la revendication 1, **caractérisé en ce que**, à titre de délimitation de la cavité vers l'extérieur, une bande de bordure est amenée, laquelle établit une liaison intime avec la plaque au moyen de la masse de mousse de matière plastique.

3. Procédé selon la revendication 1 ou 2, **caractérisé en ce que** deux bandes ou deux rails de calibrage opposés reçoivent la plaque en nids d'abeilles respectives ou une pile de plaques, afin d'obturer deux bords de coupe opposés en une seule passe de travail.

4. Procédé selon la revendication 2, **caractérisé en ce que** la bande de bordure est pressée de façon étanche contre le bord respectif de la plaque en nids d'abeilles pour engendrer une mousse d'une densité suffisante.

5. Procédé selon l'une des revendications précédentes, **caractérisé en ce que** la longueur de la bande de calibrage ou du rail de calibrage et/ou le temps de séjour ou de passage de la plaque est adapté(e) à la durée de moussage et de durcissement de la matière plastique.

6. Procédé selon la revendication 1, **caractérisé en ce qu'**une bande de bordure est appliquée sur le bord de coupe durci obturé avec la matière plastique, de préférence au moyen d'une colle thermofusible.

7. Procédé selon l'une des revendications 1 à 5, **caractérisé en ce que**, pour réaliser un espace libre défini qu'il s'agit de remplir avec la masse de mousse de matière plastique, le matériau en nids d'abeilles de la plaque est comprimé dans la zone du bord de terminaison ou du bord de coupe à l'aide d'un galet de pressage, d'un patin coulissant mis sous pression ou d'un système similaire.

8. Procédé selon la revendication un 7, **caractérisé en ce que**, dans l'espace libre rempli de la mousse de matière plastique, sont agencés des moyens pour fixer ou maintenir des ferrures, des charnières, des bandes ou organes similaires, et sont fixés par la mousse de matière plastique après son durcissement.

9. Procédé selon l'une des revendications précédentes, **caractérisé en ce que** la plaque de couverture et/ou la plaque de base de la plaque en nids d'abeilles présente un chanfrein dans la zone de bordure.
